# EUROPEAN PATENT APPLICATION

(11) **EP 1 306 526 A1**
(43) Date of publication of application: **02.05.2003**
(21) Application number: 01984430.7
(22) Date of filing: 01.08.2001
(51) Int. Cl.: F01K 27/00, F02C 1/05

(54) **POWER GENERATOR USING HYDROGEN STORAGE ALLOY AND MEDIUM/LOW TEMPERATURE HEAT**

(30) Priority: 01.08.2000 US 629931
(71) Applicant: Osumi, Yasuaki, Atsugi-shi, Kanagawa 243-0213 (JP)
(72) Inventor: Osumi, Yasuaki, Atsugi-shi, Kanagawa 243-0213 (JP)
(74) Representative: Gemmell, Peter Alan
(86) International application number: JP0106613
(87) International publication number: WO02010557

(57) **Abstract**

A power generator using a method comprising the steps of charging, into a first hydrogen storage alloy heat exchanging container and a second hydrogen storage alloy heat exchanging container air permeably communicating with each other, respectively two types of hydrogen storage alloys capable of reversibly occluding/releasing hydrogen gas and having different thermal equilibrium hydrogen pressure characteristics, providing at least two sets of heat generating cycles that use heat generated when hydrogen gas is moved between the first and second hydrogen storage alloy heat exchanging containers, heating a low temperature side hydrogen storage alloy hydrogen compound (MbH) having a higher equilibrium hydrogen pressure at the same temperature by 15 ∼ 200°C medium/low temperature waste heat sources (8), (9) and (10), allowing released hydrogen to be occluded into a high temperature side hydrogen storage alloy (Ma) having a lower equilibrium hydrogen pressure to obtain high temperature heat of 80 ∼ 500°C higher than a medium/low temperature heat source temperature, generating a heat medium high pressure gas by this heat to spin a turbine by this high pressure gas and hence generate power.

## Description

### BACKGROUND OF THE INVENTION

### 1. Field of the Invention

This invention relates to a power generator which converts unused heat energy having a temperature from 15 to 200°C such as warm water like waste water discharged from factories, heat discharged from light water reactors and the like, waste heat discharged from gas having middle to low temperature and heat of terrestrial heat energy into heat having a higher temperature from 80 to 500°C by using hydrogen absorbing and releasing actions of hydrogen absorbing alloys, and transmits the heat to a heat medium high pressure gas for a generation so that thus obtained high pressure gas drives a turbine to generate power, and can be universally used as a system for converting unused energy to generate power.

### 2. Description of the Related Art

As one of prior power generator using a turbine, a device employing power of a turbine driven by vapour of a heating medium is generally and universally used.

In such a power generator employing a gas turbine, power generation can be effected in the manner that cooling medium vapour such as steam, ammoni a, fluorocarbon, or vapour obtained by vaporizing heating medium such as natural gas with heat is pressed and introduced into the gas turbine to drive the gas turbine, discharged vapour from the gas turbine is cooled and condensed, and thus obtained liquid medium is re-heated to be circulatively introduced into the gas turbine as pressed vapour. In the device, however, a temperature difference between a heating temperature and a cooling temperature should be extremely great, namely 100°C or greater. In fact, it is difficult to drive the gas turbine of the device with a heating source having a temperature of about 150°C and a cooling source having a temperature from 10 to 30°C due to extreme poor thermal efficiency and high cost of equipment.

A power generator employing hydrogen absorbing alloys which makes use of power of a turbine driven with hydrogen gas has been developed in these years.

In such a power generating device making use of a hydrogen gas turbine, power generation can be effected in the manner that a device loaded with a hydrogen compound of a hydrogen absorbing alloy is heated with a heat source having a temperature from 300 to 350 °C to introduce released hydrogen having a high temperature and a high pressure so as to drive the hydrogen gas turbine, and then discharged hydrogen from the hydrogen gas turbine is introduced into another device loaded with a hydrogen absorbing alloy and absorbed by the hydrogen absorbing alloy so that the device is also heated to circulatively introduce hydrogen having a high temperature and a high pressure into the hydrogen gas turbine. The device, however, has problems such that more hydrogen should be moved than in a heat pump employing hydrogen absorbing alloy, and high temperature from 300 to 350°C should be used on the side of the heat source, thereby a temperature to release hydrogen rises, thermal efficiency becomes very poor, employed hydrogen absorbing alloys are rapidly deteriorated and declined in quality and durability, and cost of equipment is increased.

And, a future source of energy can be thought increasing the rates which atomic energy, natural energy and the reuse energy of the heat by the factory waste heat and so on are asked for to increase about the energy of the most part which we have used until today though the source is fossil fuel such as petroleum and coal.

These energy sources are supplied in the form of heat. For example, heat less than 1000°C from high temperature gas furnace, heat less than 300°C from the light water reactor, heat less than 150 ∼ 400°C from medium/low gas, heat less than 400°C from geothermal energy, heat less than 100°C from solar energy from solar heating system and heat from low temperature waste water are obtained, and quality of heat is diverse.

However, judging from flow of energy, about two third of heat energy (not included natural energy, are hardly used, and dumped, hence the quantity is huge. For example, in waste heat discharged from industrial plant, waste heat of medium/low temperature (less than 300°C) that has most quantity is worse its recovering rate and left. Therefore, to make use of these heat is a big subject of development of energy in the future, and to resolve the subject is connected the effective use of energy source. Further, from the point of environmental preservation, development of effective heat collection and utilization technology are desired.

The present invention is to solve the above-mentioned actual condition and has an object to provide an economical power generator with high thermal conversion efficiency which can be used in various fields.

### SUMMARY OF THE INVENTION

The present invention relates to a power generator employing hydrogen absorbing alloys and low heat wherein two types of hydrogen absorbing alloys that can reversibly absorb and release hydrogen gas and have different thermal equilibrium hydrogen pressure characteristics are used and loaded, respectively, in a first hydrogen absorbing alloy heat exchanger container and a second hydrogen absorbing alloy heat exchanger container that are ventilably connected to each other, wherein at least two sets of heat generating cycles are provided that employ heat generated when hydrogen gas is moved between the first hydrogen absorbing alloy heat exchanger container and the second hydrogen absorbing alloy heat exchanger container, wherein a hydrogen compound of one of the hydrogen absorbing alloys at a low temperature side that has a higher equilibrium pressure at the same temperature is heated by middle to low quality heat sources having a temperature from 15 to 200°C to release hydrogen, wherein the released hydrogen is absorbed by the other hydrogen absorbing alloy at a high temperature side having a lower equilibrium hydrogen pressure to thereby obtain heat having a high temperature heat from 80 to 500°C that is higher than the temperature of the medium/low temperature waste heat sources, and wherein cooling medium high temperature gas is generated by thus obtained heat so that power generation can be effected by rotating a turbine with the high pressure gas. The present device enables to convert medium/low temperature heat energy which has not been utilized into high temperature energy employing hydrogen absorbing alloys to generate power, with the high temperature energy, efficiently. High temperature heat sources used in the prior power generations are no longer required for the present device due to its high thermal conversion efficiency so that the present device is extremely economical.

### BRIEF DESCRIPTION OF DRAWINGS

Fig. 1 is a block diagram showing a power generator employing hydrogen absorbing alloys and medium/low temperature heat relating to the present invention.
Fig. 2 is a table showing heat generation cycles to drive a power generator employing hydrogen absorbing alloys and medium/low temperature heat relating to the present invention.

### PREFERRED EMBODIMENTS OF THE INVENTION

One of preferable embodiments will be described hereinafter referring to the drawings.

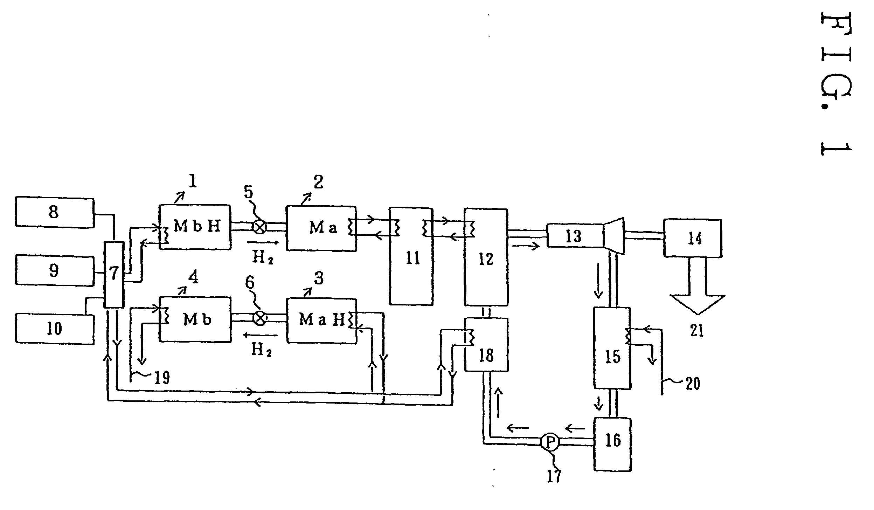

As shown in Fig. 1, the present power generator employing hydrogen absorbing alloys and medium/low temperature heat mainly comprises hydrogen absorbing alloy heat exchanger containers 1, 2, 3, 4 loaded with the hydrogen absorbing alloys, a medium/low temperature heat storage tank 7, a high temperature heat storage tank 11, a heating medium vaporizer 12, a gas turbine 13 and a power generator 14.

Medium/low temperature heat sources (from 15 to 200°C) such as heat 8 having a temperature higher than 15°C of warm waste water discharged from factories, heat 9 having a temperature from 100 to 200°C which is discharged from gas having middle to low temperature and from gas of hot blast stoves and heat 10 having a temperature below 200 °C from light water reactors and from terrestrial heat energy are stored in the medium/low temperature heat storage tank 7.

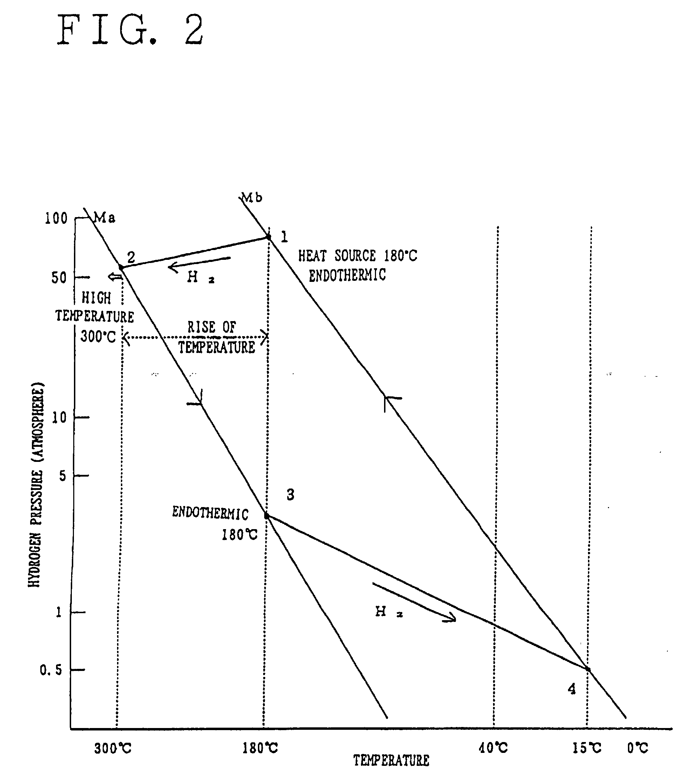

Two sets of two types of hydrogen absorbing alloys Ma, Mb having different thermal equilibrium hydrogen pressure characteristics which are loaded respectively in two hydrogen absorbing alloy heat exchanger containers are prepared. Namely, the hydrogen absorbing alloy Ma is loaded in the hydrogen absorbing alloy heat exchanger containers 2, 3, and the hydrogen absorbing alloy Mb is loaded in the hydrogen absorbing alloy heat exchanger containers 1, 4. The hydrogen absorbing alloy heat exchanger containers in each of the sets are connected to each other by means of a valve 5, 6 so that hydrogen gas can move thorough the valves. In the sets, the hydrogen absorbing alloy Mb has a higher equilibrium hydrogen pressure than that of the hydrogen absorbing alloy Ma at the same temperature as shown in Fig. 2. In Fig. 1, 15 shows a medium condenser, 16 shows a tank, 17 shows a medium feed-back pump, 18 shows a preheater, and 19 and 20 show cooling water.

How the power generating device comprises as described above is operated will be described hereinafter.

The hydrogen absorbing alloy Mb in the hydrogen absorbing alloy heat exchanger container 1 at a low temperature side having a higher equilibrium hydrogen pressure absorbs hydrogen to become a metallic hydrogen compound MbH. The hydrogen absorbing alloy heat exchanger container 1 is heated with medium/low temperature medium of 180°C obtained from unused medium/low temperature heat sources 8, 9, 10 in the heat storage tank 7, resulting in an endothermic reaction of the metallic hydrogen compound MbH to release hydrogen since pressure inside the hydrogen absorbing alloy heat exchanger container 1 is increased. The released hydrogen is moved to the hydrogen absorbing alloy heat exchanger container 2 to be absorbed by the hydrogen absorbing alloy Ma at a high temperature side having a lower equilibrium hydrogen pressure. Then an exothermic reaction occurs to generate hot temperature medium of 300°C which is taken out and stored in the high temperature storage tank 11. Thus heat having a high temperature can be obtained from heat having a medium/low temperature. The heating medium vaporizer 12 is heated with the hot water to generate the medium high pressure gas so that so obtained the high pressure gas drives turbine 13 to generate electric power at the power generator 14.

While, in a recycling process, a metallic hydrogen compound MaH in the hydrogen absorbing alloy heat exchanger container 3 is heated with medium/low temperature medium of 180°C in the medium/low temperature heat storage tank 7 resulting in an endothermic reaction to release hydrogen, since a pressure inside the hydrogen absorbing alloy heat exchanger container 3 is increased. The released hydrogen gas falls in temperature to the air outside of 15°C, and it is moved to the hydrogen absorbing alloy heat exchanger container 4 having a decreased pressure so that the hydrogen absorbing alloy Mb at a low temperature side having a higher equilibrium hydrogen pressure absorbs the released hydrogen gas to become again a metallic hydrogen compound MbH so as to repeat the cycle.

As described above, by employing at least two sets of hydrogen absorbing alloys Ma and Mb, high temperature heat can be successively generated and a uniform amount of hydrogen gas can be repeatedly moved between the hydrogen absorbing alloys Ma and Mb with no loss. The present power generator can be successively driven by heating the cooling medium vaporizer with the successively generated high temperature heat, generates heat medium high pressure gas and rotates the turbine with the heat medium high pressure gas.

Further, in the present invention, it can provide two series of system that is comprised from said first hydrogen absorbing alloy heat exchanger and second hydrogen absorbing alloy heat exchanger, and it can constructs as generating power successively by commuting these hydrogen absorbing alloy heat exchanger one after the other.

The device that relates the present invention is constructed so as to obtain 80 ∼ 500°C high temperature heat with using 15 ∼ 200°C medium/low waste heat source.

The reason to use 15 ∼ 200°C medium/low waste heat source is that in waste heat from industrial plant, because of medium/low heat less than 300°C has most quantity, besides it is advantage to use waste heat less than 300°C as heat source when the heat source is obtained, there is likely to be high hydrogen release temperature of hydrogen absorbing alloy and lower thermal efficiency together with alloy deteriorate suddenly when high temperature heat source more than 200°C is used, and on the other hand, endothermal reaction of metal hydride is not occurred enough in lower temperature source less than 15°C.

Further, a reason of composition to obtain high temperature 80 ∼ 500°C is to drive turbine by heat less than 80°C is very inefficiency in thermal efficiency, on the other hand, to obtain high heat more than 500°C is difficult in nature of hydrogen absorbing alloy together with difficultness of handling.

Further, a range of temperature obtained high temperature is decided necessary by kind of used hydrogen absorbing alloy as mentioned bellow.

Hydrogen absorbing alloy Ma and Mb are used their equilibrium hydrogen pressure is different to the mutuality, and their kind is chosen depending on heat source temperature.

As mentioned above, the present invention is to heat hydrogen absorbing alloy MbH that higher equilibrium hydrogen pressure and lower temperature in same temperature with various kinds of medium/low temperature waste heat medium such as heat more than 15°C of hot water in industrial wastewater, waste heat 100 ∼ 200°C of medium/low temperature gas and hot blast stove, heat less than 200°C of light-water reactor and geothermal power and so on, and generate electric power by rotating turbine with heat source high pressure gas occurred by absorbing discharged hydrogen to hydrogen absorbing alloy Ma that is lower equilibrium hydrogen pressure and side of higher temperature.

When such various kinds of medium/low waste heat source is heat recovered and used by endothermal reaction of hydrogen absorbing alloy hydride MbH, required characteristic to alloy hydride by temperature of waste heat medium is also different. At this time, the most important character is temperature, that is, heat of formation.

In other words, hydrogen absorbing alloy hydride MbH absorbs the heat which corresponds to the heat of formation (temperature), resolves, and releases as hydrogen.

Similarly, when hydrogen absorbing alloy Ma generates power, and it is used by absorbing hydrogen, high temperature can be obtained when heat of formation is big. The character of the alloy, that is, heat of formation (temperature) is decided by changing the kind and formation of the hydrogen absorbing alloy.

Therefore, in the present invention, kind and composition are needed to choose and compound adequately in response to used temperature of heat medium to express surely exothermic reaction of hydrogen absorbing alloy hydride and exothermic reaction of hydrogen absorbing alloy to various kinds of medium/low temperature waste heat.

The example of relation between heat medium temperature and hydrogen absorbing alloy is shown in the following.

When medium/low temperature waste heat medium is 15 ∼ 100°C, alloy that is chosen from alloy of lantanum-nickel system, alloy of Mish metal-nickel system, alloy of titanium-iron system, alloy of titanium-chromium system, alloy of titanium-vanadium system, alloy of zirconium-manganese system, alloy of zirconium-chromium system, alloy of zirconium-nickel system, and alloy of calcium-nickel system is used, when medium/low temperature waste heat medium is 100 ∼ 200°C, alloy that is chosen from alloy of lantanum-nickel system, alloy of Mish metal-nickel system, alloy of titanium-iron system, alloy of titanium-chromium system, alloy of titanium-vanadium system and alloy of titanium-cobalt system, or more than two kinds of compound hydrogen absorbing alloy is used.

When high heat medium temperature is 80 ∼ 300°C, hydrogen absorbing alloy Ma that is chosen from alloy of lantanum nickel system, alloy of Mish metal-nickel system, alloy of titanium-iron system, alloy of titanium-chromium system, alloy of titanium-vanadium system, alloy of titanium-cobalt system, alloy of zirconium-manganese system, alloy of zirconium-chromium system, alloy of zirconium-nickel system, and alloy of calcium-nickel system is used, when high heat medium temperature is 300 ∼500°C, hydrogen absorbing alloy Ma that is chosen from alloy of magnesium-nickel system, alloy of magnesium-copper system, alloy of magnesium-lantanum system, alloy of magnesium-aluminum system, alloy of magnesium-zinc system and alloy of magnesium-calcium system, or complex combined metal of alloy of magnesium system and heterogenous alloy is used. Mish metal is a mixture of rare-earth metaL

Further, as kind of heat medium high pressure gas in the present invention, hydrocarbon such as propane, n-butane, n-pentane and hexane, mixture of these gases, or water vapor is used.

The following table shows one example of principal conditions to operate the present power generating device employing hydrogen absorbing alloys and low heat.

| AMOUNT OF GENERATED POWER | **100kW** |
|---|---|
| KIND OF HYDROGEN ABSORBING ALLOY | COMBINATION OF MORE THAN TWO KINDS OF HYDROGEN ABSORBING ALLOYS MENTIONED IN THE ABOVE |
| AMOUNT OF HYDROGEN ABSORBING ALLOY | **4000-8000kg** **(Depending on the kind of alloy used)** |
| ELECTRIC GENERATING EFFICIENCY | **25-35%** |
| THERMAL CONVERSION EFFICIENCY | **70-80%** |
| TEMPERATURE OF HIGH TEMPERATURE HEAT SOURCE | **80-500%** |
| TEMPERATURE OF LOW TEMPERATURE HEAT SOURCE | **15-200%** |

### (Potential of industrial use)

The present power generating device employing hydrogen absorbing alloys and middle to low heat can convert low quality (medium/low temperature) heat energy such as warm waste water, discharged heat of gas from light water reactors and hot blast stoves and terrestrial heat energy into high quality (high temperature) heat by employing hydrogen absorbing alloys and enables to generate power efficiently with the heat so that the present invention can use energy effectively, reduce consumption of oil and contribute to preserve the earth environment.

## Claims

1. A power generator employing hydrogen absorbing alloy and middle to low temperature heat and further comprising:
two types of hydrogen absorbing alloys which are able to reversibly absorb and release hydrogen gas and which have different thermal equilibrium hydrogen pressure characteristics;
said two types of hydrogen absorbing alloys loaded respectively in a first determined hydrogen absorbing alloy heat exchanger container and a second determined hydrogen absorbing alloy heat exchanger container which are connected ventably to each other;
at least two sets of heat generating cycles which employ heat generated when hydrogen gas is moved between said first and second hydrogen absorbing alloy heat exchanger containers provided;
a hydrogen compound of one of said hydrogen absorbing alloys (MbH) at a low temperature side having a higher equilibrium pressure at the same temperature is heated by at least one medium/low temperature heat source having a temperature from 15 to 200°C to release hydrogen;
said released hydrogen absorbed by the other hydrogen absorbing alloy at a high temperature side having a lower equilibrium hydrogen pressure to generate heat having a temperature from 80 to 500 °C which is higher than the temperature of the medium/low temperature heat source;
said heat is transmitted to generate heating medium high pressure gas; and where
power is generated by a gas turbine rotating by high pressure gas.

2. A power generator employing hydrogen absorbing alloy and medium/low temperature heat described in Claim 1 wherein two series of system which is comprised from a first hydrogen absorbing alloy heat exchanger container and a second hydrogen absorbing alloy heat exchanger container, and power is generated by successively by switching these systems mutually.

3. A power generator employing hydrogen absorbing alloy and medium/low temperature heat described in Claim 1 or Claim 2 wherein as a kind of hydrogen absorbing alloy (Mb), when medium/low waste heat source is 15 ∼ 100°C, alloy that is chosen from alloy of lantanum-nickel system, alloy of Mish metal-nickel system, alloy of titanium-iron system, alloy of titanium-chromium system, alloy of titanium-vanadium system, alloy of zirconium-manganese system, alloy of zirconium-chromium system, alloy of zirconium-nickel system, and alloy of calcium-nickel system is used, when medium/low temperature waste heat medium is 100 ∼ 200°C, alloy that is chosen from alloy of lantanum-nickel system, alloy of Mish metal-nickel system, alloy of titanium-iron system, alloy of titanium-chromium system, alloy of titanium-vanadium system and alloy of titanium-cobalt system, or more than two kinds of compound hydrogen absorbing alloy is used

4. A power generator employing hydrogen absorbing alloy and medium/low temperature heat described in Claim 1 or Claim 2 wherein a kind of hydrogen absorbing alloy (Ma), when high heat medium temperature is 80 ∼ 300°C, hydrogen absorbing alloy Ma that is chosen from alloy of lantanum-nickel system, alloy of Mish metal-nickel system, alloy of titanium-iron system, alloy of titanium-chromium system, alloy of titanium-vanadium system, alloy of titanium-cobalt system, alloy of zirconium-manganese system, alloy of zirconium-chromium system, alloy of zirconium-nickel system, and alloy of calcium-nickel system is used, when high heat medium temperature is 300 ∼ 500°C, hydrogen absorbing alloy Ma that is chosen from alloy of magnesium-nickel system, alloy of magnesium-copper system, alloy of magnesium-lantanum system, alloy of magnesium-aluminum system, alloy of magnesium-zinc system and alloy of magnesium-calcium system, or complex combined metal of alloy of magnesium system and heterogenous alloy is used.

5. A power generator employing hydrogen absorbing alloy and medium/low temperature heat described in Claim 1 or Claim 2 wherein as kind of heat medium high pressure gas in the present invention, hydrocarbon such as propane, n-butane, n-pentane and hexane, mixture of these gases, or water vapor is used.
